# EUROPÄISCHE PATENTSCHRIFT

(11) **EP 1 909 556 B1**
(45) Veröffentlichungstag und Bekanntmachung des Hinweises auf die Patenterteilung: **19.10.2011**
(21) Anmeldenummer: 06791556.1
(22) Anmeldetag: 02.08.2006
(51) Int. Cl.: A01G 3/025

(54) **SCHERE ZUM SCHNEIDEN VON ÄSTEN**
SHEARS FOR CUTTING BRANCHES
CISAILLES PERMETTANT DE COUPER DES BRANCHES

(30) Priorität: 05.08.2005 DE 102005039084
(43) Veröffentlichungstag der Anmeldung: 16.04.2008
(60) Teilanmeldung: 10170864.2
(73) Patentinhaber: GARDENA Manufacturing GmbH, 89079 Ulm (DE)
(72) Erfinder: REICHART, Vincent, 89075 Ulm (DE); KEIM, Norbert, 89281 Altenstadt (DE)
(86) Internationale Anmeldenummer: PCT/EP2006/007623
(87) Internationale Veröffentlichungsnummer: WO 2007/017163

(56) Entgegenhaltungen:
- EP-A- 1 389 417
- EP-B1- 0 895 712
- JP-A- 9 322 650

## Beschreibung

Die Erfindung betrifft eine Schere zum Schneiden von Ästen mit zumindest zwei korrespondierend ausgebildeten, relativ zueinander bewegbaren Scherenteilen, von denen zumindest eines mit einer Griffeinrichtung verbunden ist und von denen zumindest eines über ein zumindest abschnittsweise flexibles Zugmittel mit einer Betätigungskraft beaufschlagbar ist, wobei das Zugmittel über eine Zugmittelrolle mit dem Scherenteil verbunden ist.

Aus dem Stand der Technik ist eine Schere zum Schneiden von Ästen bekannt. Die EP 0 895 712 B1 beschreibt eine Schere, bei der ein erstes Scherenteil als eine an einem Griffteil befestigte Backe ausgebildet ist, während ein zweites, als Schneidklinge ausgeführtes Scherenteil schwenkbeweglich mit der Backe verbunden ist. Zur Betätigung der Schneidklinge ist eine Zugmittelrolle vorgesehen, an der ein flexibles Zugseil angreift, das mit einem an dem Griffteil vorgesehenen Bedienhebel verbunden ist und das zur Übertragung einer von einem Bediener aufgebrachten Betätigungskraft vorgesehen ist. An der Zugmittelrolle ist eine exzentrisch gelagerte Kettenrolle vorgesehen, die von einer Zugkette zumindest teilweise umschlungen ist. Die Zugkette ist ihrerseits mit der Schneidklinge verbunden und ermöglicht somit die Übertragung der auf die Zugmittelrolle und der damit verbundenen Kettenrolle eingeleiteten Betätigungskraft auf die Schneidklinge. Durch die exzentrische Anordnung der Kettenrolle gegenüber der Zugmittelrolle wird eine variable Kraftübertragung ermöglicht, die eine Anpassung an einen Schnittkraftverlauf, der sich beim Schneiden von Ästen ergibt, erlaubt. Die variable Kraftübertragung ermöglicht einem Benutzer ein komfortables Betätigen der Schere zum Schneiden von Ästen, da trotz der Veränderung der Schnittkraft über den Schnittverlauf eine im wesentlichen konstante Betätigungskraft aufzubringen ist.

Die der Erfindung zugrundeliegende Aufgabe besteht darin, eine Schere der eingangs genannten Art mit verbesserter Handhabung zu schaffen. Die erfindungsgemäße Lösung ist in dem unabhängigen Anspruch 1 beschrieben.

Gemäß dem Lösungsansatz ist vorgesehen, dass die Zugmittelrolle in einer durch das Zugmittel bestimmten Umschlingungsfläche eine unrunde Kontur aufweist. Als Zugmittelrolle werden alle um eine Rotationsachse drehbaren Gegenstände bezeichnet, die geeignet sind, ein für eine Kraftübertragung vorgesehenes Zugmittel aufzunehmen. Der Begriff der Zugmittelrolle ist nicht einschränkend zu verstehen, vielmehr kann die Zugmittelrolle insbesondere als Walze, Scheibe, Quader, Würfel oder als Kombination derartiger Geometrien ausgeführt sein. Um eine Kraftübertragung von dem Zugmittel auf die Zugmittelrolle zu ermöglichen, ist das Zugmittel in einem Endbereich mit der Zugmittelrolle verbunden und umschlingt die Zugmittelrolle zumindest abschnittsweise. Maßgeblich für die Kraftübertragung zwischen Zugmittel und Zugmittelrolle ist eine durch die unrunde Kontur der Umschlingungsfläche hervorgerufene Variation eines Wirkradius. Der Wirkradius wird der durch den Abstand zwischen einer Drehachse der Zugmittelrolle und einem Ablösepunkt, an dem das Zugmittel von der Zugmittelrolle abragt und keine weitere Umschlingung bzw. kein weiterer Kontakt zwischen Zugmittelrolle und Zugmittel mehr vorliegt, bestimmt. Eine unrunde Kontur liegt vor, wenn die Umschlingungsfläche eine von einer Kreisform abweichende Kontur aufweist, diese kann insbesondere oval oder polygon ausgeführt sein. Eine Umschlirigungsfläche wird durch Radialvektoren aufgespannt, die orthogonal zu einer Drehachse der Zugmittelrolle verlaufen und senkrecht auf eine Mittellängsachse des Zugmittels ausgerichtet sind. Der Wirkradius bildet den Hebelarm, der für die Einleitung der Betätigungskraft auf die Zugmittelrolle und damit zumindest teilweise für die Kraftübersetzung der von dem Benutzer aufgebrachten Betätigungskraft auf die Scherenteile von Bedeutung ist. Durch eine Veränderung des Wirkradius, bedingt durch die unrunde Kontur der Umschlingungsfläche wird eine Veränderung der Kraftübersetzung bei einer Rotation der Zugmittelrolle und damit einhergehendem Ab- oder Aufrollen des Zugmittels auf die Zugmittelrolle erreicht.

Typischerweise ist die Zugmittelrolle nur für eine unvollständige Umschlingung durch das Zugmittel ausgebildet, in diesem Fall kann die Umschlingungsfläche als Umschlingungsebene ausgebildet werden. Es ist jedoch auch denkbar, dass die Zugmittelrolle für mehr als eine Umschlingung durch das Zugmittel ausgebildet ist, hierbei kann die Umschlingungsfläche beispielsweise als gewendelte Fläche ausgebildet sein. Durch die unrunde Kontur der Umschlingungsfläche kann der Wirkradius in einem breiten Spektrum variiert werden und ermöglicht somit eine günstige Anpassung der variablen Kraftübertragung an den im Wesentlichen durch eine Geometrie der Scherenteile und der zu zerschneidenden Äste bestimmten Schnittkraftverlauf. Die Kontur der Umschlingungsfläche kann dabei insbesondere als Polygon oder Abfolge von geraden und gekrümmten Bereichen ausgeführt sein. Entscheidend ist, dass bedingt durch die unrunde Kontur der Umschlingungsfläche zumindest zwei unterschiedliche Wirkradien an der Zugmittelrolle verwirklicht sind.

In Ausgestaltung der Erfindung weist die Kontur der Zugmittelrolle in der Umschlingungsfläche einen Krümmungsverlauf mit zumindest zwei voneinander abweichenden Krümmungsradien auf. Durch eine derartige Ausgestaltung der Zugmittelrolle wird eine besonders vorteilhafte Anpassung an den während des Astschnittvorgangs variierenden Schnittkraftbedarf erreicht. Insbesondere bei Verwendung von stetig ineinander übergehenden Krümmungen kann das Auftreten von Kraftsprüngen zumindest weitgehend vermieden werden, wodurch sich eine besonders komfortable Bedienung der Schere erzielen lässt.

In weiterer Ausgestaltung der Erfindung ist zwischen der Zugmittelrolle und dem Scherenteil eine Getriebeeinrichtung vorgesehen. Eine Getriebeeinrichtung ermöglicht eine zusätzliche Kraftübersetzung der von einem Bediener aufgebrachten Betätigungskraft zwischen der Zugmittelrolle und dem Scherenteil zur Erhöhung einer Schnittkraft des Scherenteils. Die Getriebeeinrichtung kann dabei insbesondere als Getriebe mit konstanter oder variierender Übersetzung ausgebildet sein.

In weiterer Ausgestaltung der Erfindung weist die Getriebeeinrichtung eine an der Zugmittelrolle angebrachte Verzahnung und eine korrespondierende Verzahnung an zumindest einem Scherenteil auf. Durch eine Ausführung der Getriebeeinrichtung als Kombination korrespondierender Verzahnungen lässt sich eine besonders kompakte Gestaltung der Getriebeeinrichtung verwirklichen. Zudem lässt sich durch korrespondierende Verzahnungen eine nahezu verlustfreie Kraftübertragung zwischen der Zugmittelrolle und dem Scherenteil verwirklichen. Durch den Einsatz korrespondierender Verzahnungen kann insbesondere ein hohes Übersetzungsverhältnis zwischen der Zugmittelrolle und dem Scherenteil bei kompakter Gestaltung verwirklicht werden.

In weiterer Ausgestaltung der Erfindung ist die Verzahnung an der Zugmittelrolle als koaxial zu einer Drehachse der Zugmittelrolle angebrachtes Zahnradsegment bzw. Zahnrad ausgebildet. Durch die Verwendung eines Zahnradsegmentes bzw. eines Zahnrades an der Zugmittelrolle kann in besonders vorteilhafter Weise die von der Zugmittelrolle um die Drehachse ausgeübte Drehbewegung und ein zugehöriges Drehmoment auf das zumindest eine Scherenteil übertragen werden, das mit einer korrespondierend ausgeführten Verzahnung ausgestattet ist. Bei einer bevorzugten Ausführungsform der Erfindung ist das Zahnradsegment bzw. das Zahnrad mit einer gleichmäßigen Verzahnung versehen und gewährleistet dadurch ein im Wesentlichen kontinuierliches Übersetzungsverhältnis zwischen der Zugmittelrolle und dem wirkverbundenen Scherenteil. Das Zahnradsegment bzw. das Zahnrad kann insbesondere einstückig an der Zugmittelrolle vorgesehen sein. Die Zugmittelrolle kann insbesondere als Kunststoffspritzgussteil, als Metall-Spritzgussteil oder als pulvermetallurgisch hergestelltes Formteil ausgebildet sein. Bei einer bevorzugten Ausführungsform der Erfindung ist das Zahnrad aus einem metallischen Werkstoff hergestellt und von der als Kunststoffteil ausgeführten Zugmittelrolle abschnittsweise kraft- und/oder formschlüssig umgeben, vorzugsweise als Einlegeteil im Kunststoffspritzgussverfahren umspritzt.

In weiterer Ausgestaltung der Erfindung ist die Verzahnung an zumindest einem Scherenteil zumindest als Zahnradsegment ausgebildet. Der Einsatz einer als Zahnradsegment ausgebildeten Verzahnung an dem zumindest einen Scherenteil bietet sich insbesondere dann an, wenn das Scherenteil drehbeweglich gegenüber dem zweiten Scherenteil angeordnet ist und ein Mittelpunkt des Zahnradsegmentes koaxial zu einer Drehachse zwischen den Scherenteilen angeordnet ist. Dabei kann das Zahnradsegment einstückig an dem zumindest einen Scherenteil angeformt sein. Als Herstellungsverfahren für das insbesondere als Metallteil ausgeführte Scherenteil bieten sich insbesondere Stanzen und Laserschneiden an. Sofern besonders hohe Anforderungen an das Scherenteil gestellt werden, ist auch eine Herstellung im Gesenkschmiedeverfahren oder als pulvermetallurgisches Formteil denkbar.

In weiterer Ausgestaltung der Erfindung ist das Zugmittel als Zugseil ausgeführt. Dadurch lässt sich eine besonders kostengünstige und vorteilhafte Gestaltung des Zugmittels erreichen. Als Zugseile finden insbesondere Drahtseile, Kunststoffseile oder Seile aus Naturfasern sowie Kombinationen davon Verwendung. Das Zugsseil kann mit einem Endbereich an der Zugmittelrolle form- und/oder kraftschlüssig aufgenommen werden. An einem der Zugmittelrolle abgewandten Ende kann das Zugseil mit einem Bedienteil in der Art einer Seilschlinge ausgestattet sein, die ein einfaches Ergreifen durch den Bediener ermöglicht. Es kann alternativ mit einem als Betätigungsgriff ausgeführten Bedienteil verbunden sein, der insbesondere verschwenkbar und/oder verschiebbar an der Griffeinrichtung angebracht ist. Die Seilschlinge oder der Betätigungsgriff ermöglichen die Einleitung der Betätigungskraft von dem Benutzer auf das Zugseil.

In weiterer Ausgestaltung der Erfindung ist das Zugmittel im Wesentlichen in einem zumindest nahezu abgeschlossenen Hohlraum, der durch die Griffeinrichtung und ein der Griffeinrichtung zugeordnetes Schneidengehäuse gebildet ist, geführt. Dadurch ist sichergestellt, dass sich das Zugmittel bei der Verwendung der Schere zum Schneiden von Ästen nicht in Astwerk oder Dornen verhakt, wodurch eine Benutzung der Schere erschwert würde. Zudem wird durch die Führung des Zugmittels in einem zumindest nahezu abgeschlossenen Hohlraum die Gefahr eines Einklemmens beispielsweise der Finger des Bedieners reduziert, so dass eine besonders vorteilhafte Bedienungssicherheit gewährleistet ist.

In weiterer Ausgestaltung der Erfindung ist in dem Schneidengehäuse eine Aufnahme für die Zugmittelrolle und zumindest ein Scherenteil vorgesehen. Das Schneidengehäuse, das insbesondere im Kunststoffspritzgussverfahren hergestellt werden kann, weist Aufnahmen für die Zugmittelrolle und zumindest eines der Scherenteile auf. Diese Aufnahmen können insbesondere als Achsstummel oder Schraubenaufnahmen ausgebildet sein. Durch entsprechende Aufnahmen in dem Schneidengehäuse wird eine besonders vorteilhafte und kostengünstige Montage, ein vorteilhafter Kraftfluss sowie eine hohe Stabilität der Schere und eine vorteilhafte Führung der Scherenteile gewährleist. Das Schneidengehäuse kann insbesondere zweiteilig ausgebildet sein, wobei in jedem der Bauteile korrespondierende Aufnahmen für die Zugmittelrolle und zumindest ein Scherenteil vorgesehen sein können, um eine möglichst symmetrische Beaufschlagung mit den Bedienkräften und daraus resultierenden Reaktionskräften zu gewährleisten.

In vorteilhafter Weise ist das Zugmittel zumindest abschnittsweise im Bereich einer zwischen der Griffeinrichtung und dem damit verbundenen Scherenteil vorgesehenen Gelenkeinrichtung koaxial zu einer Gelenkachse der Gelenkeinrichtung angeordnet. Die Gelenkeinrichtung ist vorgesehen, um eine Abwinklung eines durch die beiden Scherenteile gebildeten Schneidbereiches gegenüber der Griffeinrichtung zu ermöglichen und somit eine Anpassung der Schere auf unterschiedliche Schneidaufgaben zu erlauben. Durch eine abschnittsweise Anordnung des Zugmittels koaxial zu einer Gelenkachse der Gelenkeinrichtung wird ein Verschwenken des Schneidbereichs gegenüber der Griffeinrichtung ermöglicht, ohne dass dadurch eine Verlängerung oder Verkürzung des Zugmittels eintritt. Damit ist gewährleistet, dass unabhängig von der Verschwenkung des Schneidbereiches gegenüber der Griffeinrichtung immer der gleiche Schneidbereich zwischen den Scherenteilen zur Verfügung steht.

In weiterer Ausgestaltung der Erfindung ist die Gelenkeinrichtung zumindest im wesentlichen in dem Schneidengehäuse ausgebildet und die Gelenkachse ist im Wesentlichen parallel zu einer durch die Scherenteile bestimmten Schneidebene ausgerichtet. Dadurch lässt sich eine besonders wirkungsvolle Abwinklung des Schneidbereichs gegenüber der Griffeinrichtung verwirklichen. Die Unterbringung der Gelenkeinrichtung in dem Schneidengehäuse erlaubt eine besonders kostengünstige Gestaltung. Das Schneidengehäuse ist im Gegensatz zu der Griffeinrichtung, die im Wesentlichen als zylindrisches Rohr ausgeführt sein kann, ohnehin mit dem für die Aufnahme der Zugmittelrolle sowie des zumindest einen Scherenteils vorgesehen. Ein insbesondere als Kunststoffspritzgussverfahren durchgeführtes Herstellungsverfahren für das Schneidengehäuse erlaubt die Ausbildung der Gelenkeinrichtung, ohne dass dadurch wesentlich höhere Produktionskosten entstehen. Durch die Ausrichtung der Gelenkachse im wesentlichen parallel zu der Schneidebene wird eine besonders wirkungsvolle Abwinklung auf kleinem Raum erreicht, die vorteilhaft für einen Einsatz der Schere ist.

In weiterer Ausgestaltung der Erfindung ist dem Schneidengehäuse zumindest eine Umlenkeinrichtung für eine abschnittsweise Ausrichtung des Zugmittels koaxial zur Gelenkachse zugeordnet. Die Umlenkeinrichtung, die insbesondere als drehbeweglich in dem Schneidengehäuse gelagerte Umlenkrolle ausgeführt sein kann, ermöglicht in einfacher Weise eine Ausrichtung des Zugmittels koaxial zur Gelenkachse. Dadurch ist eine besonders reibungsarme Übertragung der Betätigungskraft über das Zugmittel auf die Zugmittelrolle auch im Bereich der Gelenkachse gewährleistet. Denkbar sind auch fest mit dem Schneidengehäuse verbundene Führungsabschnitte, beispielsweise Gleitschienen, an denen das Zugmittel umgelenkt wird, wodurch sich eine besonders einfache Gestaltung der Umlenkeinrichtung verwirklichen lässt.

Die Zugmittelrolle und die Gelenkachse liegen bevorzugt in der Schneidebene oder in geringem Abstand parallel zu dieser. Die Drehachse der Zugmittelrolle ist senkrecht zur Schneidebene ausgerichtet. Ein die Zugmittelrolle umgebendes Gehäuse weist in Richtung der Achse der Zugmittelrolle eine Ausdehnung auf, die bei einer bevorzugten Ausführungsform der Erfindung maximal 50% der maximalen Gehäuseabmessung in Richtung der Gelenkachse beträgt. Die maximale Ausdehnung des Gehäuses in Richtung der Achse der Zugmittelrolle ist bei einer bevorzugten Ausführungsform um höchstens 50% größer als der Durchmesser eines als Stiel dienenden Rohres.

In weiterer Ausgestaltung der Erfindung sind zumindest zwei Getriebestufen vorgesehen, welche vorteilhafterweise durch unterschiedliche Getriebearten gebildet sind, wobei die erste Getriebestufe bevorzugt eine variable Kraftübersetzung verwirklichen kann, während die zweite Getriebestufe eine konstante oder variable Kraftübersetzung verwirklicht. Durch die zumindest zwei Getriebestufen wird eine wirkungsvolle und konstruktiv einfache Übersetzung der vom Bediener aufgebrachten Bedienkraft erreicht, um die Scherenteile mit einer hohen Schneidkraft beaufschlagen zu können. Dazu kann vorgesehen sein, dass in der ersten Getriebestufe, die beispielsweise zwischen dem Zugmittel und dem an der Zugmittelrolle angebrachten Zahnrad verwirklicht sein kann, eine variable Kraftübersetzung stattfindet, die durch die unrunde Kontur der Zugmittelrolle verwirklicht ist. Für die zweite Getriebestufe kann entweder eine konstante oder eine variable Kraftübersetzung vorgesehen sein, dies hängt insbesondere von der Art der Kraftübertragung auf das Scherenteil ab. Wird das an der Zugmittelrolle vorliegende Drehmoment über ein Zahnradgetriebe übertragen, so bietet sich für die zweite Getriebestufe eine konstante Übersetzung an. Findet eine Kraftübertragung in der zweiten Getriebestufe beispielsweise über ein Hebelgetriebe statt, so ist eine variable Übersetzung einfacher zu verwirklichen.

In weiterer Ausgestaltung der Erfindung weist die erste Getriebestufe ein Übersetzungsverhältnis von zumindest 2 : 1 zwischen abgegebener und eingeleiteter Bedienkraft auf. Bei variabler Kraftübersetzung tritt bevorzugt eine Bandbreite der Übersetzungsvariation von zumindest 20% auf. Das Übersetzungsverhältnis ist so gewählt, dass zumindest eine Verdopplung der über das Zugmittel übertragenen, vom Benutzer aufgebrachten Bedienkraft in der ersten Getriebestufe verwirklicht wird. Beispielsweise beträgt ein Durchmesser des auf der Zugmittelrolle angebrachten Zahnrades maximal 50% des minimalen Wirkradius der unrund ausgeführten Zugmittelrolle. Zudem kann bei variabler Kraftübersetzung vorgesehen sein, dass bedingt durch die unrunde Kontur der Zugmittelrolle eine Veränderung des Wirkradius und damit des Übersetzungsverhältnisses in der ersten Getriebestufe von zumindest 20% auftritt. Damit findet abschnittsweise eine signifikante Veränderung der Kraftübersetzung in Richtung einer zumindest zwanzigprozentigen Kraftverstärkung statt.

In weiterer Ausgestaltung der Erfindung weist die zweite Getriebestufe ein Übersetzungsverhältnis von zumindest 2 : 1 zwischen abgegebener und eingeleiteter Bedienkraft auf. Dadurch findet auch in der zweiten Getriebestufe zumindest eine weitere Verdopplung der eingeleiteten Bedienkraft statt, so dass in Kombination mit der ersten Getriebestufe insgesamt zumindest eine Vervierfachung der vom Benutzer aufgebrachten Bedienkraft verwirklicht ist. Damit kann in vorteilhafter Weise eine variable Kraftübertragung zwischen einem von dem Bediener zu betätigenden Bedienteil und dem zumindest einen von dem Zugmittel über die Getriebeeinrichtung angesteuerten Scherenteil erreicht werden.

In weiterer Ausgestaltung der Erfindung weisen die erste und die zweite Getriebestufe jeweils ein Übersetzungsverhältnis von zumindest 3,5 : 1 zwischen abgegebener und eingeleiteter Bedienkraft auf, wobei bei variabler Kraftübersetzung in der ersten Getriebestufe gegebenenfalls eine Bandbreite der Übersetzungsvariation von zumindest 20% vorgesehen ist. Damit ermöglicht die Getriebeeinrichtung eine mehr als 10-fache Verstärkung der eingeleiteten Bedienkraft. Durch die Variation der Bedienkraft in der ersten Getriebestufe wird eine einfache Gestaltung der Getriebeeinrichtung gewährleistet, da die Übertragung der bereits an den variierenden Schnittkraftverlauf angepassten Bedienkraft auf die zweite Getriebestufe bevorzugt mittels einer konstanten Getriebeübersetzung erfolgen kann.

Zusätzlich kann in vorteilhafter Weise das Zugseil mit seinem dem Benutzer zugewandten Ende an einer Flaschenzuganordnung befestigt sein, weiche in aus der EP 0 895 712 B1 bekannter Weise eine weitere Kraftübersetzung bewirken kann und bevorzugt in einem Rohr geführt ist.

Weitere Vorteile und Merkmale der Erfindung ergeben sich aus den Ansprüchen sowie der nachfolgenden Beschreibung eines bevorzugten Ausführungsbeispiels der Erfindung, das anhand der Zeichnungen dargestellt ist. Dabei zeigt:
- Fig. 1: in perspektivischer Darstellung eine erfindungsgemäße Schere, bei der eine Hälfte des Schneidengehäuses abgenommen ist,
- Fig. 2: in ebener, schematischer Schnittdarstellung eine Zugmittelrolle für eine Schere gemäß der Fig. 1 und
- Fig. 3: in ebener, schematischer Darstellung eine Seitenansicht der Zugmittelrolle gemäß der Fig. 2,
- Fig. 4: in ebener Darstellung eine schneidenseitige Ansicht der Schere,
- Fig. 5: in ebener Darstellung eine stielseitige Ansicht der Schere.

Eine Schere 1 zum Schneiden von Ästen weist Scherenteile 2 auf, die einen als Schneidebene ausgeführten Schneidbereich 3 begrenzen, in den zu schneidende Gegenstände, insbesondere Äste, aufgenommen werden können. Als Scherenteile 2 sind eine Festklinge 4 sowie eine Schwenkklinge 5 vorgesehen, die über einen mit einer Sicherungsmutter 13 versehenen Verbindungsbolzen 12 schwenkbeweglich miteinander verbunden sind. Der Schneidbereich 3 wird im Wesentlichen durch die jeweils einander zugewandten Klingenbereiche der Festklinge 4 sowie der Schwenkklinge 5 berandet und beschreibt diejenige Zone, in der eine Relativbewegung der Festklinge 4 gegenüber der Schwenkklinge 5 zum Zerschneiden von Gegenständen stattfinden kann. Die Relativbewegung der Scherenteile 2 zueinander kann für ein Zerschneiden von Schnittgut, insbesondere von Baumästen, genutzt werden.

Die Festklinge 4 ist über Schraubverbindungen 14 mit einem Schneidengehäuse 9 verbunden, das für eine Aufnahme weiterer Bestandteile der Schere vorgesehen ist und mit einer Griffeinrichtung 10 verbunden ist. Die Griffeinrichtung 10 ist im Wesentlichen als zylindrisches Rohr ausgeführt und ist zum Greifen der Schere 1 während des Betriebes durch einen Benutzer vorgesehen. In einem nicht dargestellten, dem Schneidengehäuse 9 abgewandten Endbereich der Griffeinrichtung 10 ist ein insbesondere als Schiebegriff oder Schwenkhebel ausgeführter Betätigungsgriff vorgesehen, der mit einem als Zugseil 7 ausgeführten Zugmittel verbunden ist. Der Betätigungsgriff ermöglicht dem Benutzer die Einleitung der Betätigungskraft auf das Zugseil 7 durch eine Linearbewegung, eine Schwenkbewegung oder eine Kombination davon.

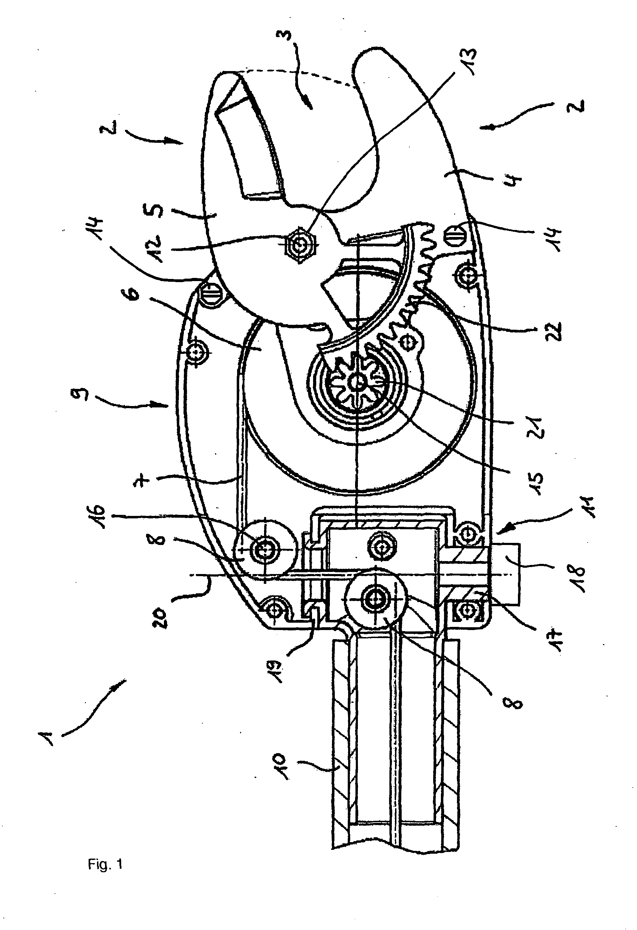

In dem Schneidengehäuse 9 ist eine Zugmittelrolle 6 auf einem Lagerbolzen 15 drehbar aufgenommen und ist mit dem Zugseil 7 verbunden. Das Zugseil 7 wird über zwei Umlenkrollen 8 jeweils im Wesentlichen rechtwinklig umgelenkt und steht an einem dem Schneidengehäuse 9 abgewandten Ende der Griffeinrichtung 10 mit dem nicht dargestellten Betätigungsgriff in Wirkverbindung. Die Umlenkrollen 8 sind jeweils drehbeweglich auf Lagerzapfen 16 aufgesteckt und ermöglichen eine reibungsarme Kraftübertragung von dem Betätigungsgriff über das Zugseil 7 auf die Umlenkrolle 8. An einem der Griffeinrichtung 10 zugewandten Endbereich des Schneidengehäuses 9 ist eine zumindest teilweise geschnitten dargestellte Gelenkeinrichtung 11 vorgesehen, die aus einem fest mit der Griffeinrichtung 10 verbundenen, im Wesentlichen T-förmigen Achsrohr 17, einer Riegeltaste 18 und einem korrespondierend zu dem Achsrohr 17 an dem Schneidengehäuse 9 vorgesehenen Gleitlager 19 aufgebaut ist. Die Gelenkeinrichtung 11 ermöglicht ein Verschwenken des Schneidengehäuses 9 um eine Gelenkachse 20, wobei ein Schwenkbereich von zumindest +/- 30 Grad gegenüber der in der Fig. 1 dargestellten Ausgangsposition vorgesehen ist.

Das Zugseil 7 ist im Bereich der Gelenkeinrichtung 11 durch die Umlenkrollen 8 konzentrisch zur Gelenkachse 20 geführt, so dass bei einer Schwenkbewegung des Schneidengehäuses 9 um die Gelenkachse 20 keine Verlängerung oder Verkürzung des Zugseils 7 stattfindet. Damit ist unabhängig von dem Schwenkwinkel des Schneidengehäuses 9 gegenüber der Griffeinrichtung 10 immer der gleiche Schneidbereich 3 gewährleistet. Um den Einfluss des Schwenkwinkels des Schneidengehäuses 9 gegenüber der Griffeinrichtung 10 auf die Länge des Zugseils 7 zu minimieren, ist eine der Umlenkrollen 8 in dem Achsrohr 17 befestigt, während die zweite Umlenkrolle 8 im Schneidengehäuse 9 angebracht ist. Somit findet bei einer Abwinklung des Schneidengehäuses 9 gegenüber der Griffeinrichtung 10 lediglich eine Torsion des Zugseils 7 in der Gelenkachse 20 statt. Diese Torsion bewirkt jedoch zumindest nahezu keine Verlängerung oder Verkürzung des Zugseils 7, so dass ein Verschwenken des Schneidengehäuses ohne Auswirkungen auf den Schneidbereich 3 der Schere 1 bleibt.

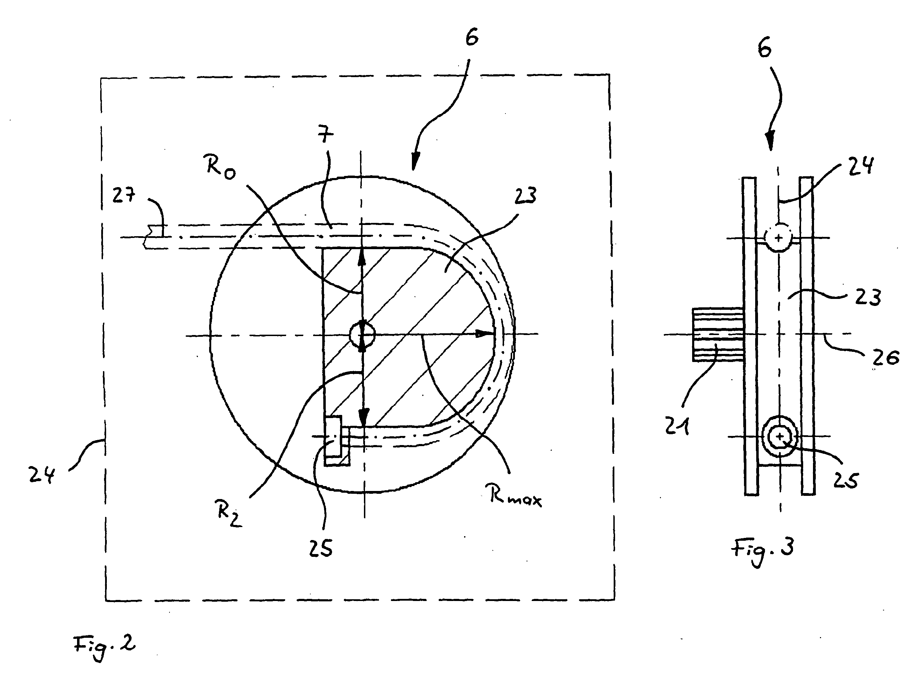

Die Zugmittelrolle 6, die in der Fig. 3 näher dargestellt ist, weist ein Zahnrad 21 auf, das form- und kraftschlüssig an der Zugmittelrolle befestigt ist und das auf den Lagerbolzen 15 aufgesteckt ist. Das Zahnrad 21 weist eine gleichmäßige, konzentrisch zu dem Lagerbolzen 15 angeordnete Verzahnung auf. Mit dem Zahnrad 21 steht ein an der Schwenkklinge 5 einstückig vorgesehenes Zahnradsegment 22 in einer formschlüssigen Wirkverbindung, wobei das Zahnradsegment 22 ebenfalls mit einer gleichmäßigen Verzahnung ausgestattet ist und konzentrisch zu dem Verbindungsbolzen 12 angeordnet ist.

Gemäß der Darstellung der Fig. 2, die eine Schnittdarstellung der Zugmittelrolle 6 gemäß der Fig. 1 darstellt, ist vorgesehen, dass ein von dem Zugseil 7 umschlungener Stützbereich 23 in der durch das Zugseil 7 bestimmten Umschlingungsfläche, die vorliegend als Umschlingungsebene 24 ausgeführt ist, eine unrunde Kontur aufweist. Die Umschlingungsebene 24 wird durch eine Schar von Radialvektoren aufgespannt, die in radialer Richtung orthogonal von der Drehachse 26 ausgehen und jeweils senkrecht auf die Mittellängsachse 27 des Zugseils 7 weisen. Exemplarisch für die Radialvektoren sind in der Fig. 2 die Wirkradien R0, Rmax und R2 dargestellt.

Die unrunde Kontur des Stützbereiches 23 ist dabei so gewählt, dass in der in Fig. 1 dargestellten Ruheposition der Schere 1 gemäß der Darstellung der Fig. 2 der Wirkradius R0 an der Ablösestelle 28, also an der Stelle, an der das Zugseil 7 in der Ruheposition von der Zugmittelrolle 6 abragt und keine weitere Umschlingung mehr vorliegt, verhältnismäßig klein ist. Für eine Position der Schwenkklinge 5 im Schneidbereich 3, bei der üblicherweise eine maximale Schneidkraft erforderlich ist, ist an der korrespondierenden Stelle der Zugmittelrolle 6 ein deutlich vergrößerter Wirkradius Rmax vorgesehen, der entsprechend zu der im weiteren Schnittverlauf wieder abnehmenden Schnittkraft in einen kleineren Wirkradius R2 übergeht.

Der Wirkradius (R0, Rmax, R2) entspricht dem Hebelarm, mit dem die von Zugseil 7 auf die Zugmittelrolle 6 übertragene Zugkraft in ein Drehmoment umgesetzt wird. Dieses Drehmoment wirkt auf das fest mit der Zugmittelrolle 6 verbundene, gleichmäßig geformte und konzentrisch zum Verbindungsbolzen 12 angeordnete Zahnrad 21 ein. Da der Wirkradius bedingt durch die unrunde Kontur des Stützbereichs 23 veränderlich ist, wird auch die von dem Zugseil 7 eingeleitete Betätigungskraft in unterschiedlicher Weise auf das Zahnrad 21 übertragen und führt somit zu der wunschgemäßen variablen Kraftübersetzung zwischen dem nicht dargestellten Betätigungsgriff und der Schwenkklinge 5.

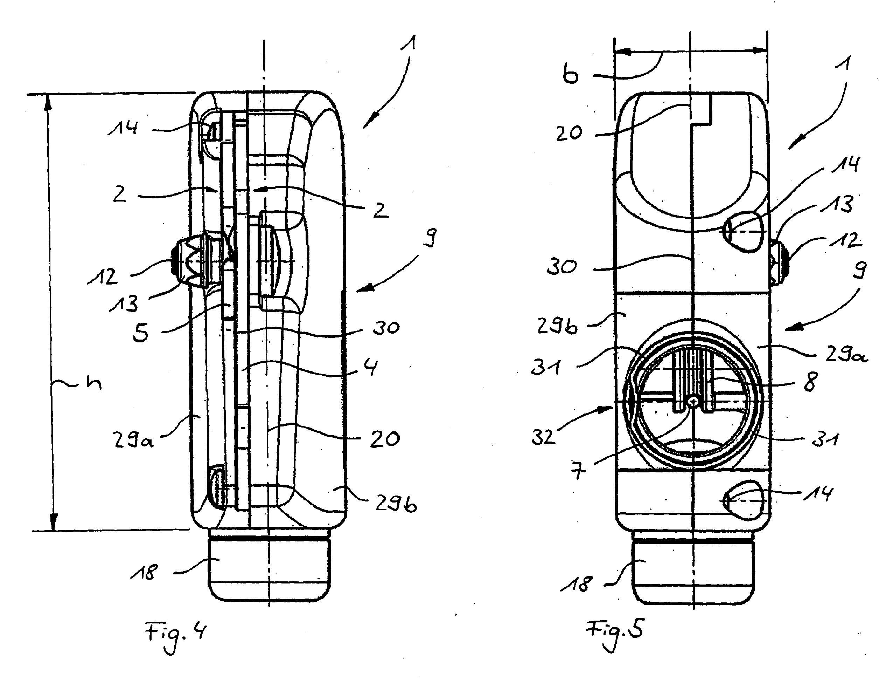

Wie in den Fig. 4 und 5 dargestellt, weist das Schneidengehäuse 9 zwei Gehäusehälften 29a und 29b auf, die an einer Trennfuge 30 aneinander gefügt sind und mit Schraubverbindungen 14 miteinander verbunden sind. Die Trennfuge 30 teilt das Schneidengehäuse 9 in einem den Scherenteilen 2 abgewandten Gehäusebereich im wesentlichen symmetrisch. Im Bereich der Scherenteile 2 verläuft die Trennfuge hingegen, wie in Fig. 4 näher dargestellt, rückwärtig an der Festklinge 4 entlang, das heißt, die Festklinge 4 liegt flächig auf der Gehäusehälfte 29b auf. Dadurch ergibt sich diesem Bereich eine asymmetrische Teilung des Schneidengehäuses 9. Der durch zwei halbzylindrisch ausgeführte, an den Schneidengehäuseteilen 29a und 29b angeformte Hülsenabschnitte 31 gebildete Aufnahmestutzen für die rohrförmig ausgeführte Griffeinrichtung 10 wird durch die Trennfuge 30 mittig geteilt. An dem dem Schneidengehäuseteil 29b zugeordneten Hülsenabschnitt 31 ist eine konkave Vertiefung 32 vorgesehen, die für eine formschlüssige, verdrehsichere Aufnahme der Griffeinrichtung 10 an dem Schneidengehäuse 9 gestaltet ist. Der Außendurchmesser der Hülsenabschnitte 31 beträgt in etwa 90% einer Breitenausdehnung b des Schneidengehäuses 9. Die in den Fig. 4 und 5 nicht dargestellte Griffeinrichtung 10 weist einen Außendurchmesser auf, der im Wesentlichen der Breitenausdehnung b des Schneidengehäuses 9 entspricht.

Die Umlenkrolle 8 ist mittig im Schneidengehäuse 9 angeordnet, so dass das Zugseil 7, das durch die Griffeinrichtung 10 geführt ist, vorteilhaft umgelenkt werden kann.

Der Lagerbolzen 15 der Zugmittelrolle 6 und der Verbindungsbolzen 12 der Scherenteile 2 sind parallel zur Darstellungsebene der Fig. 4 und 5 angeordnet. Eine Breitenausdehnung b des Schneidengehäuses 9 in Richtung der Erstreckung des Lagerbolzens 15 und des Verbindungsbolzens 12 ist für eine vorteilhafte Handhabung der Schere 1 besonders schlank gewählt und erlaubt einen günstigen Vorschub der Schere 1 auch bei dichtem Astwerk. Eine Höhenausdehnung h des Schneidengehäuses 9 in Richtung der Gelenkachse 20 entspricht im Wesentlichen der durch eine Außenkontur der Scherenteile bestimmten Maulweite der Schere, wie auch aus Fig. 1 zu entnehmen ist. Die Breitenausdehnung b beträgt für die in den Fig. 4 und 5 dargestellte Ausführungsform der Schere in etwa 35 % der Höhenausdehnung h. Das Schneidengehäuse 9 ist in einem den Scherenteilen 2 zugewandten Bereich hinsichtlich der Breitenausdehnung b keilförmig in Richtung der Schneidenteile 2 verjüngt, so dass sich eine besonders vorteilhafte Bedienung der Schere erzielen lässt, da die Keilform zu einer verbesserten Durchdringung dichten Astwerks beiträgt. Die Zugmittelrolle 6 und die Gelenkachse 20 sind bevorzugt in der Schneidebene oder in geringem Abstand parallel zu dieser angeordnet. Eine durch den Lagerbolzen 15 bestimmte Drehachse der Zugmittelrolle 6 ist senkrecht zur Schneidebene ausgerichtet.

Bei einer nicht dargestellten Ausführungsform der Erfindung ist vorgesehen, dass die Zugmittelrolle unmittelbar an der Schwenkklinge befestigt ist bzw. vorzugsweise einstückig mit der Schwenkklinge ausgebildet ist. Damit kann eine unmittelbare Ankopplung des Zugmittels über die Zugmittelrolle an die Schwenkklinge verwirklicht werden und es liegt lediglich eine Getriebeeinrichtung mit einer Getriebestufe vor. Eine derartige Anordnung ist insbesondere dann von Interesse, wenn eine Kraftübersetzung der Betätigungskraft an anderer Stelle, beispielsweise im Bereich des Betätigungsgriffs vorgesehen ist. Denkbar ist, dass die auf den Betätigungsgriff einwirkende Betätigungskraft über eine Getriebeeinrichtung oder einen Flaschenzug verstärkt wird und erst anschließend auf das Zugmittel eingeleitet wird. Damit lässt sich im Bereich des Schneidengehäuses eine besonders kompakte und einfache Gestaltung der Schere verwirklichen, so dass die Handhabbarkeit der Schere in vorteilhafter Weise beeinflusst wird.

Bei einer weiteren, nicht dargestellten Ausführungsform der Erfindung ist vorgesehen, dass beide Scherenteile bewegbar an dem Schneidengehäuse angebracht sind. Dabei weist ein erstes Scherenteil in Bezug auf eine bogenförmig ausgeführte Verzahnung radial nach außen gewandte Zähne auf, während ein zweites Scherenteil eine konzentrisch zur ersten ausgerichtete bogenförmige Verzahnung aufweist, deren Zähne radial nach innen gerichtet sind. Ein mit einer Zugmittelrolle verbundenes Zahnrad ist derart zwischen der Verzahnung der ersten Scherenteil und der Verzahnung der zweiten Scherenteil angeordnet, dass eine Rotation des Zahnrads zu einer gegenläufigen Bewegung der beiden Scherenteile führt. Damit lässt sich in vorteilhafter Weise unter Anwendung der vorstehend beschriebenen Wirkungen einer variablen Kraftübersetzung auch eine Schere mit gegenläufig verschwenkbaren Scherenteilen verwirklichen.

## Patentansprüche

1. Schere (1) zum Schneiden von Ästen mit zumindest zwei korrespondierend ausgebildeten, relativ zueinander bewegbaren Scherenteilen (2), von denen zumindest eines mit einer Griffeinrichtung (10) verbunden ist und von denen zumindest eines über ein zumindest abschnittsweise flexibles Zugmittel (7) mit einer Betätigungskraft beaufschlagbar ist, wobei das Zugmittel (7) über eine Zugmittelrolle (6) mit dem Scherenteil (2) wirkverbunden ist, **dadurch gekennzeichnet, dass** die Zugmittelrolle (6) in einer durch das Zugmittel (7) bestimmten Umschlingungsfläche (24) eine unrunde Kontur aufweist.

2. Schere nach Anspruch 1, **dadurch gekennzeichnet, dass** die Kontur der Zugmittelrolle (6) in der Umschlingungsfläche (24) einen Krümmungsverlauf mit zumindest zwei voneinander abweichenden Krümmungsradien (R0, Rmax, R2) aufweist.

3. Schere nach Anspruch 2, **dadurch gekennzeichnet, dass** zwischen der Zugmittelrolle (6) und dem Scherenteil (2) eine Getriebeeinrichtung (21, 22) vorgesehen ist, die insbesondere für eine Kraftübersetzung zur Erhöhung einer Schnittkraft des Scherenteils (2) ausgebildet ist.

4. Schere nach Anspruch 3, **dadurch gekennzeichnet, dass** die Getriebeeinrichtung eine an der Zugmittelrolle angebrachte Verzahnung (21) und eine korrespondierende Verzahnung (22) an zumindest einem Scherenteil (2) aufweist.

5. Schere nach Anspruch 4, **dadurch gekennzeichnet, dass** die Verzahnung an der Zugmittelrolle (6) als koaxial zu einer Drehachse (15) der Zugmittelrolle (6) angebrachtes, insbesondere einstückig angeformtes Zahnradsegment oder Zahnrad (21) ausgebildet ist.

6. Schere nach Anspruch 4, **dadurch gekennzeichnet, dass** die Verzahnung an zumindest einem Scherenteil (2) zumindest als insbesondere einstückig angeformtes Zahnradsegment (22) ausgebildet ist.

7. Schere nach Anspruch 1, **dadurch gekennzeichnet, dass** das Zugmittel (7) als Zugseil ausgeführt ist.

8. Schere nach Anspruch 1, **dadurch gekennzeichnet, dass** das Zugmittel (7) im wesentlichen in einem zumindest nahezu abgeschlossenen Hohlraum, der durch die Griffeinrichtung (10) und ein der Griffeinrichtung (10) zugeordnetes Schneidengehäuse (9) gebildet wird, geführt ist.

9. Schere nach Anspruch 8, **dadurch gekennzeichnet, dass** in dem Schneidengehäuse (9) eine Aufnahme für die Zugmittelrolle (6) und zumindest ein Scherenteil (2) vorgesehen ist.

10. Schere nach einem der vorhergehenden Ansprüche, **dadurch gekennzeichnet, dass** das Zugmittel (7) zumindest abschnittsweise im Bereich einer zwischen der Griffeinrichtung (10) und dem damit verbundenen Scherenteil (2) vorgesehenen Gelenkeinrichtung (11 ) koaxial zu einer Gelenkachse (20) der Gelenkeinrichtung (11) angeordnet ist. insbesondere eine Umlenkrolle, für eine abschnittsweise Ausrichtung des Zugmittels (7) koaxial zur Gelenkachse (20) zugeordnet ist.

11. Schere nach Anspruch 10, **dadurch gekennzeichnet, dass** die Gelenkeinrichtung (11) zumindest im wesentlichen in dem Schneidengehäuse (9) ausgebildet ist und die Gelenkachse (20) im wesentlichen parallel zu einer durch die Scherenteile (2) bestimmten Schneidebene (3) ausgerichtet ist.

12. Schere nach Anspruch 11, **dadurch gekennzeichnet, dass** dem Schneidengehäuse (9) zumindest eine Umlenkeinrichtung (8),

13. Schere nach Anspruch 1, **dadurch gekennzeichnet, dass** zumindest zwei Getriebestufen (7, 21, 22) vorgesehen sind

14. Schere nach Anspruch 13, **dadurch gekennzeichnet, dass** eine erste Getriebestufe (6,7) vorzugsweise eine variable Kraftübersetzung verwirklicht, während die zweite Getriebestufe (21, 22) eine konstante oder variable Kraftübersetzung verwirklicht.

15. Schere nach Anspruch 13 oder 14, **dadurch gekennzeichnet, dass** die erste Getriebestufe (7, 21) ein Übersetzungsverhältnis von zumindest 2 : 1 zwischen abgegebener und eingeleiteter Bedienkraft und insbesondere eine Bandbreite der Übersetzungsvariation von zumindest 20% aufweist.

16. Schere nach Anspruch 13, **dadurch gekennzeichnet, dass** die zweite Getriebestufe (21, 22) ein Übersetzungsverhältnis von zumindest 2 : 1 zwischen abgegebener und eingeleiteter Bedienkraft aufweist.

17. Schere nach Anspruch 13 oder 14, **dadurch gekennzeichnet, dass** die erste (7, 21) und die zweite (21, 22) Getriebestufe jeweils ein Übersetzungsverhältnis von zumindest 3,5 : 1 zwischen abgegebener und eingeleiteter Bedienkraft aufweisen, wobei in der ersten Getriebestufe (7, 21) gegebenenfalls eine Bandbreite der Übersetzungsvariation von zumindest 20% vorgesehen ist.

## Claims

1. Shears (1) for cutting branches, having at least two correspondingly formed shear parts (2) that are able to move in relation to one another, at least one of which is connected to a handle device (10) and at least one of which can be subjected to an actuating force via a pulling means (7) which is flexible at least in portions, wherein the pulling means (7) is operatively connected to the shear part (2) via a pulling-means roller (6), **characterized in that** the pulling-means roller (6) has a non-round contour in a looping area (24) determined by the pulling means (7).

2. Shears according to Claim 1, **characterized in that** the contour of the pulling-means roller (6) in the looping area (24) has a curved profile with at least two different radii of curvature (R0, Rmax, R2).

3. Shears according to Claim 2, **characterized in that** between the pulling-means roller (6) and the shear part (2) there is provided a gear arrangement (21, 22), which is configured in particular for force transmission in order to increase the cutting force of the shear part (2).

4. Shears according to Claim 3, **characterized in that** the gear arrangement has a toothing (21) attached to the pulling-means roller and a corresponding toothing (22) on at least one shear part (2).

5. Shears according to Claim 4, **characterized in that** the toothing on the pulling-means roller (6) is formed as a gearwheel (21) or gearwheel segment that is attached, in particular integrally formed, coaxially with a rotary pin (15) of the pulling-means roller (6).

6. Shears according to Claim 4, **characterized in that** the toothing on at least one shear part (2) is formed at least as an in particular integrally formed gearwheel segment (22).

7. Shears according to Claim 1, **characterized in that** the pulling means (7) is configured as a pull cable.

8. Shears according to Claim 1, **characterized in that** the pulling means (7) is guided substantially in an at least virtually completely closed cavity, which is formed by the handle device (10) and a cutter housing (9) assigned to the handle device (10).

9. Shears according to Claim 8, **characterized in that** in the cutter housing (9) there is provided a mount for the pulling-means roller (6) and at least one shear part (2).

10. Shears according to one of the preceding claims, **characterized in that** at least portions of the pulling means (7) are arranged in the region of a hinge device (11) provided between the handle device (10) and the shear part (2) connected thereto, and coaxially with a hinge pin (20) of the hinge device (11).

11. Shears according to Claim 10, **characterized in that** the hinge device (11) is formed at least substantially in the cutter housing (9) and the hinge pin (20) is oriented substantially parallel to a cutting plane (3) determined by the shear parts (2).

12. Shears according to Claim 11, **characterized in that** at least one deflection device (8), in particular a deflection roller, for orienting portions of the pulling means (7) coaxially with the hinge pin (20) is assigned to the cutter housing (9).

13. Shears according to Claim 1, **characterized in that** at least two gear stages (7, 21, 22) are provided.

14. Shears according to Claim 13, **characterized in that** a first gear stage (6, 7) implements preferably a variable force transmission while the second gear stage (21, 22) implements a constant or variable force transmission.

15. Shears according to Claim 13 or 14, **characterized in that** the first gear stage (7, 21) has a transmission ratio of at least 2:1 between the operating force output and the operating force introduced and has in particular a range of the transmission variation of at least 20%.

16. Shears according to Claim 13, **characterized in that** the second gear stage (21, 22) has a transmission ratio of at least 2:1 between the operating force output and the operating force introduced.

17. Shears according to Claim 13 or 14, **characterized in that** the first gear stage (7, 21) and the second gear stage (21, 22) each have a transmission ratio of at least 3.5:1 between the operating force output and the operating force introduced, with optionally a range of the transmission variation of at least 20% being provided in the first transmission stage (7, 21).

## Revendications

1. Cisailles (1) pour couper des branches avec au moins deux parties de cisailles (2) réalisées de manière correspondante, mobiles l'une par rapport à l'autre, dont au moins l'une est connectée à un dispositif de préhension (10) et dont au moins l'une peut être sollicitée avec une force d'actionnement par le biais d'un moyen de traction (7) au moins en partie flexible, le moyen de traction (7) étant en liaison fonctionnelle avec la partie de cisailles (2) par le biais d'un rouleau de moyen de traction (6), **caractérisées en ce que** le rouleau de moyen de traction (6) présente un contour non circulaire dans une surface d'enveloppement (24) définie par le moyen de traction (7).

2. Cisailles selon la revendication 1, **caractérisées en ce que** le contour du rouleau de moyen de traction (6) présente, dans la surface d'enveloppement (24), une allure courbe avec au moins deux rayons de courbure (R0, Rmax, R2) s'écartant l'un de l'autre.

3. Cisailles selon la revendication 2, **caractérisées en ce qu'**entre le rouleau de moyen de traction (6) et la partie de cisailles (2) est prévu un dispositif d'engrenage (21, 22) qui est réalisé notamment pour une démultiplication de force pour augmenter une force de coupe de la partie de cisailles (2).

4. Cisailles selon la revendication 3, **caractérisées en ce que** le dispositif d'engrenage présente une denture (21) réalisée sur le rouleau de moyen de traction et une denture correspondante (22) sur au moins une partie de cisailles (2).

5. Cisailles selon la revendication 4, **caractérisées en ce que** la denture sur le rouleau de moyen de traction (6) est réalisée sous forme de segment de roue dentée ou sous forme de roue dentée (21) monté(e) coaxialement à un axe de rotation (15) du rouleau de moyen de traction (6), notamment façonné(e) d'une seule pièce.

6. Cisailles selon la revendication 4, **caractérisées en ce que** la denture sur au moins une partie de cisailles (2) est réalisée au moins sous forme de segment de roue dentée (22) façonné notamment d'une seule pièce.

7. Cisailles selon la revendication 1, **caractérisées en ce que** le moyen de traction (7) est réalisé sous forme de câble de traction.

8. Cisailles selon la revendication 1, **caractérisées en ce que** le moyen de traction (7) est guidé essentiellement dans une cavité au moins pratiquement fermée, qui est formée par le dispositif de préhension (10) et un boîtier de coupe (9) associé au dispositif de préhension (10).

9. Cisailles selon la revendication 8, **caractérisées en ce qu'**un logement est prévu dans le boîtier de coupe (9) pour le rouleau de moyen de traction (6) et au moins pour une partie de cisailles (2).

10. Cisailles selon l'une quelconque des revendications précédentes, **caractérisées en ce que** le moyen de traction (7) est disposé au moins en partie dans la région d'un dispositif d'articulation (11) prévu entre le dispositif de préhension (10) et la partie de cisailles (2) connectée à celui-ci, coaxialement à un axe d'articulation (20) du dispositif d'articulation (11).

11. Cisailles selon la revendication 10, **caractérisées en ce que** le dispositif d'articulation (11) est réalisé au moins essentiellement dans le boîtier de coupe (9) et l'axe d'articulation (20) est orienté essentiellement parallèlement à un plan de coupe (3) défini par les parties de cisailles (2).

12. Cisailles selon la revendication 11, **caractérisées en ce que** l'on associe au boîtier de coupe (9) au moins un dispositif de renvoi (8), notamment une poulie de renvoi, pour une orientation partielle du moyen de traction (7) coaxialement à l'axe d'articulation (20).

13. Cisailles selon la revendication 1, **caractérisées en ce qu'**au moins deux étages d'engrenage (7, 21, 22) sont prévus.

14. Cisailles selon la revendication 13, **caractérisées en ce qu'**un premier étage d'engrenage (6, 7) effectue de préférence une démultiplication de force variable, tandis que le deuxième étage d'engrenage (21, 22) effectue une démultiplication de force constante ou variable.

15. Cisailles selon la revendication 13 ou 14, **caractérisées en ce que** le premier étage d'engrenage (7, 21) présente un rapport de démultiplication d'au moins 2:1 entre la force de commande en sortie et introduite, et notamment une largeur de bande de variation de démultiplication d'au moins 20 %.

16. Cisailles selon la revendication 13, **caractérisées en ce que** le deuxième étage d'engrenage (21, 22) présente un rapport de démultiplication d'au moins 2:1 entre la force de commande en sortie et introduite.

17. Cisailles selon la revendication 13 ou 14, **caractérisées en ce que** le premier (7, 21) et le deuxième (21, 22) étage d'engrenage présentent à chaque fois un rapport de démultiplication d'au moins 3,5:1, entre la force de commande en sortie et introduite, et dans le premier étage d'engrenage (7, 21) est prévue éventuellement une largeur de bande de variation de démultiplication d'au moins 20 %.
